(19) Europäisches Patentamt
European Patent Office
Office européen des brevets

(11) Publication number: **0 668 331 A1**

# (12) EUROPEAN PATENT APPLICATION

(21) Application number: **95101703.7**

(51) Int. Cl.[6]: **C09D 7/12**, B05D 7/02

(22) Date of filing: **08.02.95**

(30) Priority: **15.02.94 JP 40569/94**

(43) Date of publication of application:
**23.08.95 Bulletin 95/34**

(84) Designated Contracting States:
**DE FR GB**

(71) Applicant: **Nippon Paint Co., Ltd.**
**1-2 Oyodokita 2-chome**
**Kita-ku,**
**Osaka-shi,**
**Osaka 531 (JP)**

(72) Inventor: **Yamane, Isao**
**19-4, Ujina-Kanda 2-chome,**
**Minami-ku**
**Hiroshima-shi,**
**Hiroshima (JP)**

(74) Representative: **Hansen, Bernd, Dr.**
**Dipl.-Chem. et al**
**Hoffmann, Eitle & Partner,**
**Patentanwälte,**
**Arabellastrasse 4**
**D-81925 München (DE)**

## (54) Paints for repairing lustrous films and repairing process.

(57) A paint for repairing a brightening agent-containing lustrous film having a metallic pigment and/or a mica pigment is disclosed, which comprises (A) a brightening agent-containing paint for repairing and (B) a fluorine surface regulating agent and/or a polysiloxane surface regulating agent, and further a process for repairing a brightening agent-containing lustrous film having a metallic pigment and/or a mica pigment is disclosed, which comprises applying the repair paint described above to a portion to be repaired, and then applying a clear paint thereto by a wet-on-wet coating method according to film characteristics required for a nonrepaired film surface.



Rank Xerox (UK) Business Services
(3.10/3.09/3.3.4)

## FIELD OF THE INVENTION

The present invention relates to a repair paint for restoring faulty portions of lustrous films applied to, for example, bodies or parts of automobiles and a repairing process thereof, and more particularly to a paint for repairing lustrous films which can effectively improve the color difference between a nonrepaired film surfaces and a repaired film surface without the necessity for complicated color toning and a repairing process thereof.

## BACKGROUND OF THE INVENTION

For example, in order to form imposing glossily metallic lustrous films on automobile bodies, paints containing metallic pigments and/or mica pigments have previously been used in many cases. These films coated are generally formed by multi-coating processes of the three-coat system in which the above-described paints containing metallic pigments and/or mica pigments are applied to film surfaces undercoated and intermediate coated, and clear coated films are further formed thereon.

For the lustrous films thus-formed, when coating defects such as "sagging" and "cratering" are produced in stages of body coating lines, adhered dust drops off to induce local peeling of the coatings, or coated surfaces of the bodies are damaged by contact accidents, it is necessary to repair such portions by coating to such conditions that color tones visually become the same. In the repairing processes previously employed, the portions to be repaired are subjected to sanding treatment, then, paint color matched so as to give the same color tones as those of the lustrous films are applied plural times thereto by means of air spray guns, and finally, clear coating is carried out thereon. However, the partial repairing means of this kind require very skilled techniques for repairing operations and color toning operations to obtain the same color tones. It is further difficult for even skilled workers to always obtain the same color tones due to individual difference.

As a coating technique for impairing the lustrous films to solve such a problem, JP-A-2-202961 (the term "JP-A" as used herein means an "unexamined published Japanese patent application") proposes a paint for repairing a pearl coating in which a surface of a material to be coated is coated with a color-based paint containing a specified color pigment and a mica-based paint containing an irregularly reflective material such as mica flakes, and the coated surface is coated with a clear paint, said paint comprising at least the color pigment contained in said color-based paint and a resin contained in the mica-based paint, and a repairing process using the same.

In addition, JP-A-1-245882 proposes a partially repaired pearl mica color coating structure laminated with a color-based film containing a color pigment, a mica-based film and a clear coated film, successively, wherein the color-based paint is the same as the mica-based paint, in the resin system, and a color toned film formed with a color toning paint obtained by mixing the color-based paint with the mica-based paint is inserted between the color-based film and the mica-based film. Further, JP-A-4-27475 proposes a process for repairing a coated surface in which a glossy base containing mica and/or a metallic pigment is formed on a color base, comprising spraying a mist of a diluted color-based paint on a portion including a polished color-based portion and a boundary portion between it and an outer portion thereof, and then applying a glossy paint to a portion including the mist-coated portion. Further, JP-A-60-71067 discloses a coating method for constructional materials. However, JP-A-60-71067 does not disclose the paints for repairing a lustrous film due to improvement of a color difference of appearance between a nonrepaired film surface and a repaired film surface (i.e., fluctuation of orientation of the lustrous pigment particles) which is the present invention.

However, all the techniques do not sufficiently satisfy the repairing accuracy of the same color tone, and particularly, it is difficult to obtain the identity of color difference in pale-colored lustrous films.

## SUMMARY OF THE INVENTION

Visual discord frequently observed in repairing a pale-colored lustrous films is a phenomenon that even though the hue of a repaired film surface is equivalent to that of a nonrepaired film surface at a highlighted portion (wherein the visual angle is an angle nearly perpendicular to the coated surface), it looks blackish at a shaded portion (wherein the visual angle is an angle nearly parallel to the coated surface). As a result of investigations in the cause of this color difference, the present inventors discovered that the difference between electrostatic coating in a production line and air spray coating in repairing makes changes of the orientation of lustrous pigment particles contained in the film coated. Namely, when the lustrous film is formed by electrostatic coating in the production line, the lustrous pigment particles are randomly orientated

in the film coated formed because of a higt flow late of a paint and the influence of static electricity. On the other hand, when the paint is applied by means of a spray gun in repairing, the lustrous pigment particles are orientated in parallel with a film surface coated in the film coated because of an extremely low flow late (about 1/4) of the paint. For this reason, a large difference arises between the flip-flop property to the nonrepaired film surface (the lightness difference due to the angle) and the color-flop property (the hue difference due to the angle).

Accordingly, it becomes possible to repair the film in the same color tone at the highlighted portion and the shaded portion in spite of the difference in the coating means without complicated repairing and color toning operations by approximating the orientation conditions of the lustrous pigment particles in the nonrepaired film and the repaired film to each other. The present inventors have successively conducted research on this point. As a result, the fact has been elucidated that addition of a specified surface regulating agent to a repair paint improves the flip-flop property and the color-flop property to the nonrepaired film surface, and effectively erases the hue-modulation at the shaded portion even in the pale color system.

The present invention has been developed based on the above-described findings. An object of the present invention is to provide a paint for repairing lustrous films which can reduce the color difference between a nonrepaired film surface and a repaired film surface without the necessity for complicated repairing operation and color toning operations and always impart the same color tone over a wide color range.

Another object of the present invention is to provide a repairing process using the above-described paints.

One aspect of the present invention relates to a paint for repairing a brightening agent-containing lustrous film having a metallic pigment and/or a mica pigment, which comprises the following components (A) and (B):

(A) A lustrousening agent-containing paint for repairing; and

(B) A fluorine surface regulating agent and/or a polysiloxane surface regulating agent

Another aspect of the present invention relates to a process for repairing a brightening agent-containing lustrous film having a metallic pigment and/or a mica pigment, which comprises appling a paint for repairing the lustrous film, said paint containing components (A) and (B) described above, to a portion to be repaired, and then applying a clear paint thereto by a wet-on-wet coating method according to film characteristics required for a nonrepaired film surface.

## BRIEF DESCRIPTION OF THE DRAWINGS

Fig. 1 is a schematic cross sectional view showing a state of a film repaired by a conventional process;

Fig. 2 is a schematic cross sectional view showing a state of a film repaired by the present invention; and

Fig. 3 is a graph showing the relationship between the light-receiving angle and the Δb value (yellowish color) according to Examples and Comparative Examples.

## DETAILED DESCRIPTION OF THE INVENTION

As to the coating system to be repaired in the present invention, there is usually no particular restriction on paint components and coating forms as long as the film is a multiple layer system containing a metallic pigment, a mica pigment, or a metallic pigment and a mica pigment. For example, as resins for the brightening agent-containing paints, film-forming resins such as acrylic resins, polyester resins and alkyd resins and crosslinking agents such as amino resins and/or block polyisocyanate compounds are used. Preferred examples of the compositions include combinations of acrylic resins and amino resins and/or block polyisocyanate compounds. Typical examples of film structures include a coating system in which a film of a coloring or non-coloring paint containing a metallic pigment and/or a mica pigment is formed on a ground surface comprising a cationic or anionic electrodeposited undercoated film formed on a substrate surface, and a polyester, alkyd or acrylic resin intermediate coated film or a color intermediate coated film formed thereon, and a coating system in which a color-based film is formed on the ground surface described above, followed by application of a pearl mica paint. In many cases, clear coating is conducted on the coated surface. Resin components of paint used in the clear coating include resins belonging to the same families as the resins of the brightening agent-containing paints described above.

The brightening agent-containing films containing the metallic pigments and/or the mica pigments can be formed from commercially available lustrous paint containing fine metallic flakes such as aluminum

flakes, bronze flakes, tin flakes, gold flakes, silver flakes, titanium metal flakes, stainless steel flakes and nickel-copper flakes; mica particles (or leaves) such as pearl mica (white mica) particles, interference mica particles and colored mica particles, or both of these lustrous components. The lustrous paint of the solution type are preferably used. They may be of any type of the organic solvent type, the aqueous (aqueous solution, aqueous dispersion or emulsion) type and the non-aqueous dispersion type as long as they are of the solution type. The solid content is preferably 30 to 70% by weight in production, and 10 to 50% by weight in coating. The lustrous paint may contain organic or inorganic color pigments and/or extender pigments if necessary. They may further contain curing catalysts, ultraviolet absorbers, antioxidants and surface regulating agents according to their purpose.

As (A) a brightening agent-containing paint to be repaired constituting the repair paint of the present invention, a resin is used which belongs to the same family as the brightening agent-containing paint used for formation of the nonrepaired film described above. Basically, it is most suitable to have the same composition as the brightening agent-containing paint used for the nonrepaired film. However, the repair paint may be different from the brightening agent-containing paint used for the nonrepaired film in their resin components, and the concentration of the brightening agent contained therein may vary within the allowable range. It is therefore unnecessary to conduct sophisticated color toning using a white pigment, a black pigment, etc. as the prior art.

The brightening agent-containing repair paint described above further contains (B) a fluorine surface regulating agent or a polysiloxane surface regulating agent, or both of them at the same time. Of these, as the fluorine surface regulating agent, a homopolymer or a copolymer of a polyfluoroalkyl group-containing monomer can be used, and a nonionic polymer is preferably used.

The polyfluoroalkyl group-containing monomer is preferably a perfluoroalkyl group-containing monomer usually having 2 to 16 carbon atoms, preferably 2 to 8 carbon atoms. Examples thereof include unsaturated esters such as acrylates and methacrylates indicated by the following formulas:

$CH_3(CF_2)_4CH_2OCOC(CH_3)=CH_2$
$CH_3(CF_2)_5CH_2CH(OH)CH_2OCOC(CH_3)=CH_2$
$CF_3(CF_2)_6COOCH=CH_2$
$CF_3(CF_2)_6(CH_2)_2OCOC(CH_3)=CH_2$
$CF_3(CF_2)_7(CH_2)_2OCOCH=CH_2$
$CF_3(CF_2)_7(CH_2)_4OCOCH=CH_2$
$CF_3(CF_2)_7CH_2CH(OH)CH_2OCOCH=CH_2$

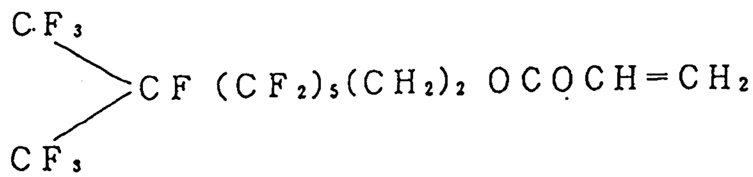

$CF_3(CF_2)_7SO_2N(CH_3)(CH_2)_2OCOC(CH_3)=CH_2$
$CF_3(CF_2)_7SO_2N(C_2H_5)(CH_2)_2OCOCH=CH_2$
$CF_3(CF_2)_7SO_2N(C_3H_7)(CH_2)_2OCOCH=CH_2$
$CF_3(CF_2)_7CONH(CH_2)_2OCOCH=CH_2$
$CF_3(CF_2)_8(CH_2)_2OCOCH=CH_2$
$CF_3(CF_2)_8(CH_2)_2OCOC(CH_3)=CH_2$
$CF_3(CF_2)_8CONH(CH_2)_2OCOC(CH_3)=CH_2$

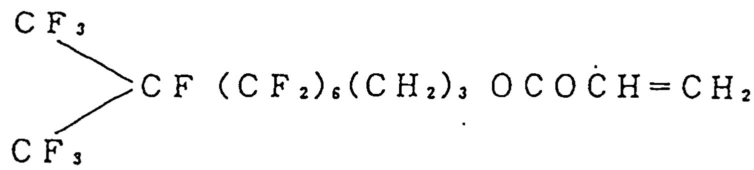

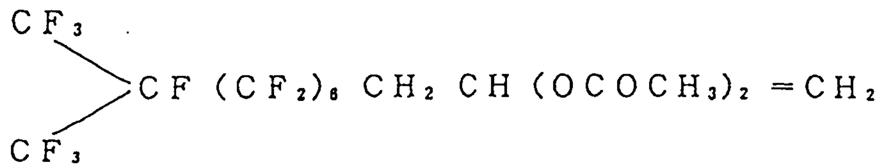

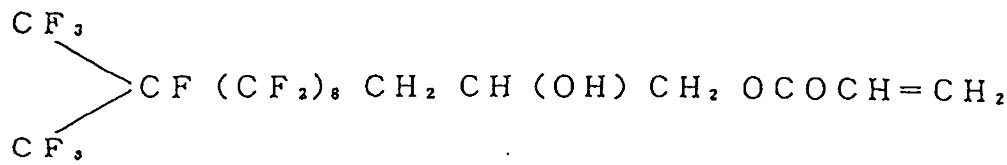

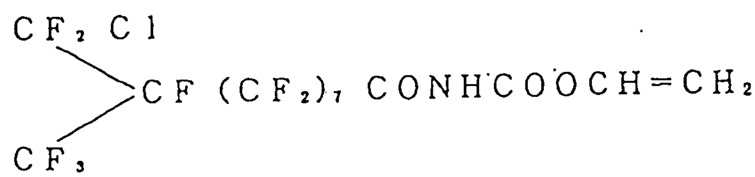

$H(CF_2)_{10}CH_2OCOCH=CH_2$
$CF_2Cl(CF_2)_{10}CH_2OCOC(CH_3)=CH_2$

Further, a perfluoroalkyl group-containing vinyl ether having generally 2 to 16 carbon atoms, preferably 2 to 8 carbon atoms, can also be used as the polyfluoroalkyl group-containing monomer. Examples thereof include perfluoroalkyl group-containing alkyl vinyl ethers indicated by the following formulas:

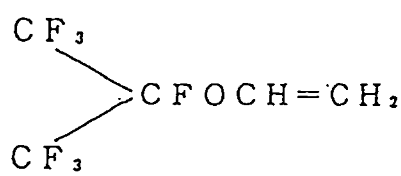

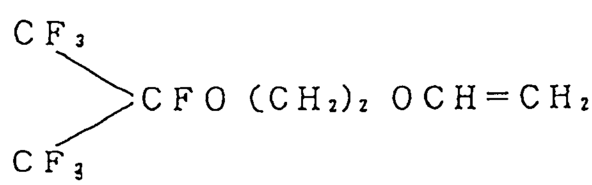

$CF_3(CF_2)CH_2CH(OH)CH_2O(CH_2)_2OCH=CH_2$
$CF_3(CF_2)_5(CH_2)_2OCH=CH_2$
$CF_3(CF_2)_5(CH_2CH_2O)_2CH=CH_2$
$CF_3(CF_2)_7(CH_2)_2OCH=CH_2$

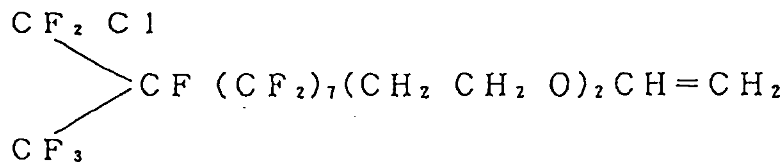

The particularly preferred fluorine surface regulating agent is a nonionic perfluoroalkyl group-containing oligomer indicated by the following formula (1):

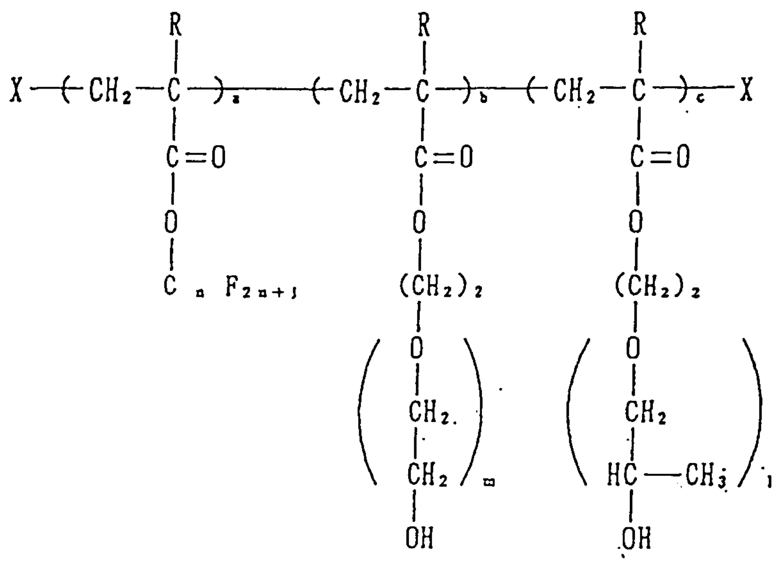

(1)

wherein R represents H or a methyl group, X represents, an initiator residue, n is 1 to 18 (preferably 10 to 12), m is 2 to 18 (preferably 12 to 15), ℓ is 2 to 16 (preferably 12 to 15), and a, b and c represent repeating units, provided that $300 \geqq a+b+c \geqq 20$; or a perfluoroalkyl ethylene oxide addition product indicated by the following formula (2):

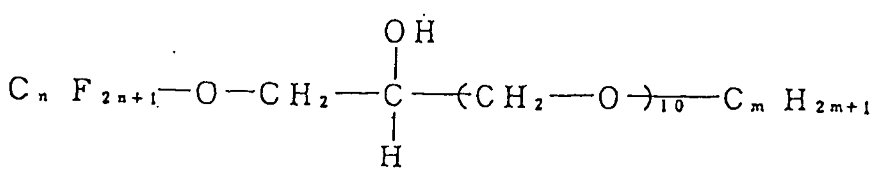

(2)

wherein n is 3 to 18 (preferably 10 to 12), and m is 3 to 18 (preferably 12 to 15).

On the other hand, as the polysiloxane surface regulating agent, a polysiloxane polyether copolymer or an alkyl-modified polysiloxane is used. Examples thereof include poly(dimethylsiloxane), poly-(methylphenylsiloxane), poly(methylhydrogensiloxane) and oxyalkylene-modified polysiloxane. In particular, use of the polysiloxane surface regulating agents represented by the following formulas can bring about a very excellent repairing effect.

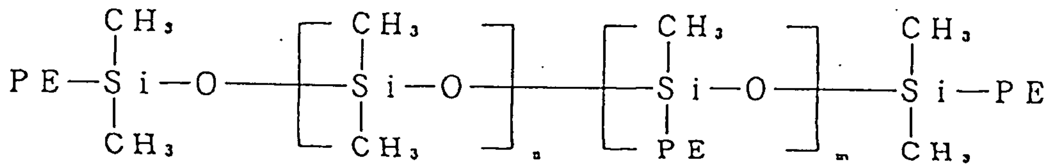

$(PE = -(CH_2)_3 - O -(C_2H_4O)_x -(C_3H_6O)_y - H)$

n: 3 - 50
m: 1 - 25
x: 1 - 10
y: 0 - 10

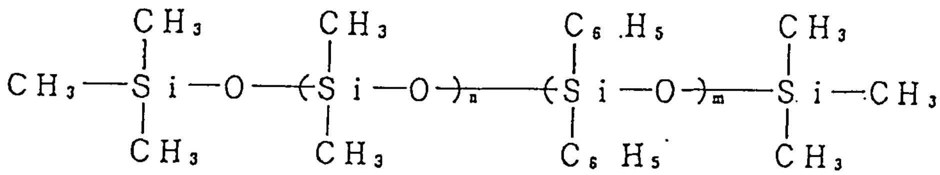

n: 3 - 50
m: 1 - 25

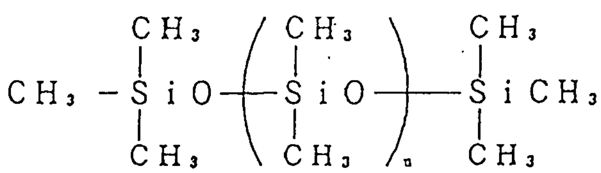

n: 3 - 50

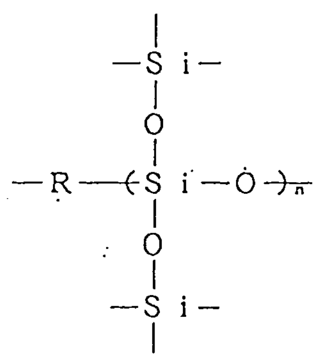

n: 3 - 50

The above-described fluorine surface regulating agent and/or polysiloxane surface regulating agent (B) is preferably added in an amount of from 0.1 to 5 parts by weight, more preferably from 0.5 to 3 parts by weight, based on 100 parts by weight of brightening agent component contained in the brightening agent-containing paint to be repaired (A). If it is added in an amount of less than 0.1 part by weight, the hue regulating effect is not exhibited. On the other hand, the amount added exceeding 5 parts by weight causes excessively disordered orientation of the metallic pigment particles contained in the film, resulting in a tendency to produce fluctuations in the color difference.

The repair paint of the present invention is applied to the portion to be repaired on the nonrepaired film surface. Either line coating according to electrostatic coating or partial spray coating due to air spray may be used for coating. It is desirable that the repaired film to be coated has a Munsell lightness indication of preferably 1 or more, and more preferably 3 or more.

When a clear coated film has been formed on the nonrepaired film, a clear paint having the same composition is applied to the surface coated with the repair paint by a wet-on-wet coating method according to coating characteristics required for the nonrepaired surface, thus completing the repairing. Accordingly, when films on automobile bodies are repaired, the repair paints of the present invention can be applied to any of repairs of new automobiles, partial repairs and repairs in the market.

Although the present invention includes the paint for repairing the lustrous film and the repairing process, preferred embodiments of the repair paint and the repairing processes are enumerated as below:

(1) The brightening agent of component (A) is the metallic pigment and/or the mica pigment which is the same as that of the nonrepaired film surface.

(2) The fluorine surface regulating agent of component (B) is the nonionic perfluoroalkyl group-containing oligomer (represented by formula (1)) or the perfluoroalkyl ethylene oxide addition product (represented by formula (2)).

(3) The polysiloxane surface regulating agent of component (B) is the polyether-modified polysiloxane.

(4) Component (B) is added preferably in an amount of from 0.1 to 5 parts by weight, more preferably in an amount of from 0.5 to 3 parts by weight, based on 100 parts by weight of brightening agent component contained in component (A).

(5) The repair paint is a paint for repairs of new automobiles used as a line paint, for partial repairs used as a paint exclusively used for partial repairs, or for repairs in the market.

When a faulty portion of the brightening agent-containing film formed by electrostatic coating which comprises the metallic pigment and/or the mica pigment is repaired by applying the brightening agent-containing paint having the same composition by air spray coating, the orientation of the bright pigment particles contained in the film formed by air spray coating are different from that of the bright pigment particles contained in the film formed by electrostatic coating due to the difference in discharge of the paint. Fig. 1 is a cross sectional view schematically showing its state. Reference numeral 1 shows a substrate, reference numeral 2 shows an undercoated film, reference numeral 3 shows an intermediate coated film, reference numeral 4 shows a lustrous film, and reference numeral 5 shows a clear film. These constitute a nonrepaired film layer. Reference numeral 6 shows a repair lustrous film formed on a portion to be repaired, and reference numeral 7 shows a repair clear coated film. Bright pigment particles 8 contained in the lustrous film 4 of the nonrepaired film are randomly orientated because of a high flow late of the paint and the influence of static electricity, whereas bright pigment particles 9 contained in the repair lustrous film 6 are orientated in parallel with a film surface coated because of a small discharge of the paint on coating.

However, when the repair paint of the present invention is used for repairs, the bright pigment particles 9 in the repaired film show random orientation similar to that of the bright pigment particles 8 in the nonrepaired film, as shown in Fig. 2. This equalization of the orientation state functions to reduce the flip-flop property and the color-flop property, and brings about the same light reflection condition, resulting in the unobserved difference in visual color tone, independently of the highlighted portion or the shaded portion.

The fluorine surface regulating agent and/or the polysiloxane surface regulating agent (B) cause changes in orientation of the bright pigment particles (leaves) contained in a repaired film.

The reason why the orientation of the bright pigment particles in the repaired film are changed by addition of the fluorine surface regulating agent and/or the polysiloxane surface regulating agent has not been elucidated in detail yet. It is however presumed that the surface regulating agent component transfers to a surface portion of the film coated during drying and curing courses after coating, and this transfer behavior is accompanied by generation of turbulence in the film coated, which causes random orientation of the bright pigment particles.

The present invention is illustrated in detail by the following examples, compared with the comparative examples in which no surface regulating agent is added in the same coating system. The surface regulating agents used in the respective examples are as follows (these surface regulating agents are hereinafter represented by symbols):

(1) Fluorine surface regulating agents

F-1: Nonionic perfluoroalkyl group-containing oligomer represented by formula (1) (number average molecular weight: 20,000-30,000, R: H, X: OH)

F-2: Nonionic perfluoroalkyl ethylene oxide addition product represented by formula (2) (n = about 10, m = about 10)

(2) Polysiloxane surface regulating agents

Si-1: Poly(dimethylsiloxane)
Si-2: Polysiloxane polyether

EXAMPLES 1-5 AND COMPARATIVE EXAMPLE 1

A SPC steel plate (2 m × 2 m) subjected to chemical conversion treatment using a zinc phosphate chemical conversion treating agent ("SURFOINE SD2000" manufactured by Nippon Paint Co., Ltd.) was used as a substrate, which was coated with a cationic electrodeposition paint ("Power Top U-50" manufactured by Nippon Paint Co., Ltd.) so as to give a dried film having a thickness of 20 µm. Then, a polyester resin paint for intermediate coating ("Orga S-52E Sealer" manufactured by Nippon Paint Co., Ltd.) was applied to a surface of this undercoated film by a dry-on-wet coating method so as to give a dried film having a thickness of 35 µm, followed by baking. Then, an acrylic resin metallic paint containing an aluminum flake pigment ("Superlac M-12", 3.2PB 7.7/0.8, manufactured by Nippon Paint Co., Ltd.) was applied thereto by electrostatic coating so as to give a dried film having a thickness of 15 µm, and successively an acrylic resin clear paint ("Superlac O-150 Clear" manufactured by Nippon Paint Co., Ltd.) was applied by a wet-on-wet coating method to obtain a dried film having a thickness of 40 µm on dry film basis, followed by baking after setting. In this case, the content of the brightening agent in the metallic film was 7.9% by weight.

A damaged portion (repair area: about 30 cm × 30 cm) reaching the intermediate coated film was formed on the laminated film thus-formed. A repair paint prepared by adding fluorine surface regulating agent F-1 to the same metallic paint as described above was applied to the damaged portion to be repaired so as to give a dried film having a thickness of 10 µm, and the same clear paint as described above was further applied to the repaired surface by a wet-on-wet coating method so as to give a dried film having a thickness of 30 µm, followed by baking.

The hue consistency of the nonrepaired surface and the repaired surface after formation of the repaired film was visually observed for a highlighted portion and a shaded portion, respectively, and evaluated according to the four grades:

G: Good, M: Moderate, P: Somewhat Poor, B: Bad

Further, using an angle-changing color-difference meter (manufactured by Nippon Denshoku Kogyo Co. Ltd.), the color difference (ΔE, the nonrepaired surface was used as a reference level) between the nonrepaired film and the repaired film was measured for the shaded portion (light-receiving angle: -60°), the highlighted portion (light-receiving angle: +30°) and a front portion (light-receiving angle: 0°). These results are shown in Table 1, comparing them with the content of the fluorine surface regulating agent added per 100 parts by weight of brightening agent component of the paint.

EXAMPLES 6-8 AND COMPARATIVE EXAMPLE 2

A nonrepaired film was formed in the same manner as in Example 1 except that the aluminum flake pigment-containing acrylic resin metallic paint was substituted by "Superlac M-12", 7.4BG 3.0/6.7, manufactured by Nippon Paint Co., Ltd. In this case, the content of the brightening agent in the metallic film was 1.7% by weight. A damaged portion (repair area: about 30 cm × 30 cm) reaching the metallic film was formed on the nonrepaired film. A repair paint prepared by adding a specified amount of fluorine surface regulating agent F-1, F-2 or Si-1 to the same metallic paint as described above was applied to the damaged portion to be repaired to obtain a dried film having a thickness of 8 µm on dry film basis, and subsequently, the same clear coated film as that of the nonrepaired film was formed by the wet-on-wet coating method, thereby performing repair coating. The hue of the repaired portion thus-formed was measured and evaluated in the same manner as in Example 1. The results are also shown in Table 1, comparing them with the kind and content of the surface regulating agents used.

EXAMPLES 9-11 AND COMPARATIVE EXAMPLE 3

A nonrepaired film layer was formed in the same manner as in Example 1 except that the metallic paint was substituted by an acrylic resin metallic paint containing pearl mica and an aluminum flake pigment ("Superlac M-90", 1.9Y 7.4/0.6, manufactured by Nippon Paint Co., Ltd). In this case, the content of the brightening agent in the metallic film was 10.4% by weight. A damaged portion (repair area: about 30 cm × 30 cm) reaching the metallic film was formed on the nonrepaired film. A repair paint prepared by adding a

specified amount of fluorine surface regulating agent F-1, F-1 and Si-1, or Si-2 to the same metallic paint as described above was applied to the damaged portion to be repaired to obtain a dried film having a thickness of 10 µm on dry film basis, and subsequently, the same clear coated film as that of the nonrepaired film was formed by the wet-on-wet coating method, thereby performing repair coating. The hue of the repaired portion thus-formed was measured and evaluated in the same manner as in Example 1. The results are also shown in Table 1, comparing them with the content of the surface regulating agents used.

EXAMPLES 12-16 AND COMPARATIVE EXAMPLE 4

A nonrepaired film was formed in the same manner as in Example 9 except that the metallic paint was substituted by an acrylic resin metallic paint containing pearl mica and an aluminum flake pigment ("Superlac M-90", 4.4Y 6.2/1.7, manufactured by Nippon Paint Co., Ltd). In this case, the content of the brightening agent in the metallic film was 9.9% by weight. A damaged portion (repair area: about 30 cm × 30 cm) reaching the metallic film was formed on the nonrepaired film. A repair paint prepared by adding a specified amount of fluorine surface regulating agent F-1 or Si-1 to the same metallic paint as described above was applied to the damaged portion to be repaired so as to give a dried film having a thickness of 8 µm, and then, the same clear coated film as that of the nonrepaired film was formed by the wet-on-wet coating method to obtain a dried film having a thickness of 30 µm on dry film basis, thereby performing repair coating. The hue of the repaired portion thus-formed was measured and evaluated in the same manner as in Example 1. The results are shown in Table 2, comparing them with the kind and content of the surface regulating agents used.

For the nonrepaired film and the repaired film of Example 16, the colorimetry was conducted according to the L-a-b color system using an angle-changing colorimeter (manufactured by Nippon Denshoku Co. Ltd.). The relationship between the Δb value (the difference in a yellowish color, the nonrepaired surface was used as a standard) and the light-receiving angle in this case is shown in Fig. 3 (the surface regulating agent was added). For comparison, with respect to Comparative Example 4 in which no surface regulating agent was added, the colorimetry was also similarly conducted, and the results thereof are also shown in Fig. 3. The graph shown in Fig. 3 indicates that, in the case of the repaired film, the color difference is stable over a wide light-receiving angle range even in the hue of the pale color system to show the same color tone.

EXAMPLE 17

An undercoated film was formed on a surface of a substrate by electrodeposition coating in the same manner as in Example 1, and a polyester resin paint for color intermediate coating ("Orga P-2 Sealer", 7.5PB 2/4, manufactured by Nippon Paint Co., Ltd.) was applied thereto by the dry-on-wet coating method so as to give a dried film having a thickness of 35 µm, followed by baking. Then, an acrylic resin paint containing pearl mica ("Superlac M-90", 7.2PB 1.1/6.9, manufactured by Nippon Paint Co., Ltd.) was applied thereto by electrostatic coating so as to give a dried film having a thickness of 15 µm, and successively, an acrylic resin clear paint ("Superlac O-150 Clear" manufactured by Nippon Paint Co., Ltd.) was applied by the wet-on-wet coating method to obtain a dried film having a thickness of 40 µm on dry film basis, followed by baking after setting. In this case, the content of the brightening agent in the metallic film was 13.6% by weight.

A damaged portion (repair area: about 30 cm × 30 cm) reaching the pearl mica film was formed on the laminated film thus-formed. A repair paint prepared by adding fluorine surface regulating agent F-1 to the same pearl mica paint as described above was applied to the damaged portion to be repaired to obtain a dried film having a thickness of 8 µm on dry film basis, and the same clear paint as described above was further applied to the surface to be repaired by the wet-on-wet coating method to obtain a dried film having a thickness of 30 µm on dry film basis, followed by baking. The hue of the repaired portion thus-formed was measured and evaluated in the same manner as in Example 1. The results are also shown in Table 2, comparing them with the content of the surface regulating agent used.

EXAMPLE 18

An undercoated film and an intermediate coated film were formed on a surface of a substrate in the same manner as in Example 1, and a polyester resin color-based paint ("Orga P-2 Sealer", 4.5PB 8.4/1.1, manufactured by Nippon Paint Co., Ltd.) was applied thereto by the dry-on-wet coating method so as to give a dried film having a thickness of 35 µm. Then, an acrylic resin paint containing pearl mica ("Orga TO-520", 2.4PB 8.3/0.9, manufactured by Nippon Paint Co., Ltd.) was applied thereto by the dry-on-wet coating method by electrostatic coating so as to give a dried film having a thickness of 15 µm, and successively an acrylic resin clear paint ("Orga TO-563 Clear" manufactured by Nippon Paint Co., Ltd.) was applied by the wet-on-wet coating method to obtain a dried film having a thickness of 40 µm on dry film basis, followed by baking after setting. In this case, the content of the brightening agent in the metallic film was 5.2% by weight.

A damaged portion (repair area: about 30 cm × 30 cm) reaching the color-based film was formed on the laminated film thus-formed. A repair paint prepared by adding fluorine surface regulating agent F-1 to the same pearl mica paint as described above was applied to the damaged portion to be repaired to obtain a dried film having a thickness of 10 µm on dry film basis, and the same clear paint as described above was further applied to the surface to be repaired by the wet-on-wet coating method to obtain a dried film having a thickness of 30 µm on dry film basis, followed by baking. The hue of the repaired portion thus-formed was measured and evaluated in the same manner as in Example 1. The results are also shown in Table 2, comparing them with the content of the surface regulating agent used.

EXAMPLE 19

A damaged portion (repair area: about 30 cm × 30 cm) reaching a pearl mica film was formed on a nonrepaired film formed in the same manner as in Example 18. A repair paint prepared by adding fluorine surface regulating agent F-1 to an acrylic resin paint containing pearl mica in which the content of mica was reduced to 3.2% by weight was applied to the damaged portion to be repaired to obtain a dried film having a thickness of 8 µm on dry film basis, and subsequently, the same clear coated film as that of the nonrepaired coated film was formed by the wet-on-wet coating method to obtain a dried film having a thickness of 30 µm on dry film basis, thereby performing repair coating. The hue of the repaired portion thus-formed was measured and evaluated in the same manner as in Example 1. The results are also shown in Table 2, comparing them with the content of the surface regulating agent used.

EXAMPLE 20

A damaged portion (repair area: about 30 cm × 30 cm) reaching an intermediate coated film was formed on a nonrepaired film formed in the same manner as in Example 9. A repair paint prepared by adding fluorine surface regulating agent F-1 to an automobile repair paint ("NAX Mighty GII", 1.9Y 7.4/0.6, manufactured by Nippon Paint Co., Ltd.) containing a brightening agent in the same content as that of a nonrepaired film and a polyurethane resin as a resin component was applied to the damaged portion to be repaired to obtain a dried film having a thickness of 10 µm on dry film basis, and subsequently, the same clear coated film as that of the nonrepaired film was formed by the wet-on-wet coating method to obtain a dried film having a thickness of 30 µm on dry film basis, thereby performing repair coating. The hue of the repaired portion thus-formed was measured and evaluated in the same manner as in Example 1. The results are also shown in Table 2, comparing them with the content of the surface regulating agent used.

TABLE 1

| | Content of Surface Regulating Agent (wt%) | | | | Visual Evaluation | | Color Difference (ΔE) | | |
|---|---|---|---|---|---|---|---|---|---|
| | F-1 | F-2 | Si-1 | Si-2 | S | H | S | H | Front |
| Example 1 | 0.1 | - | - | - | M | M | 2.5 | 5.1 | 5.3 |
| Example 2 | 0.5 | - | - | - | M | M | 2.3 | 4.8 | 5.0 |
| Example 3 | 1.0 | - | - | - | M | M | 1.8 | 2.0 | 3.5 |
| Example 4 | 3.0 | - | - | - | G | G | 1.5 | 1.5 | 2.1 |
| Example 5 | 5.0 | - | - | - | G | G | 1.7 | 1.3 | 2.0 |
| Comparative Example 1 | 0 | - | - | - | B | B | 3.5 | 7.2 | 8.2 |
| Example 6 | 3.0 | - | - | - | G | G | 0.2 | 3.0 | 0.8 |
| Example 7 | - | 0.5 | - | - | G | G | 0.5 | 2.5 | 0.6 |
| Example 8 | - | - | 1.0 | - | G | G | 0.3 | 2.0 | 0.8 |
| Comparative Example 2 | 0 | - | - | - | P | P | 0.5 | 8.5 | 2.3 |
| Example 9 | 3.0 | - | - | - | G | G | 0.8 | 3.0 | 2.0 |
| Example 10 | 2.0 | - | 1.0 | - | G | G | 0.7 | 2.5 | 1.5 |
| Example 11 | - | - | 0.5 | - | G | M | 0.6 | 3.5 | 2.2 |
| Comparative Example 3 | 0 | - | - | - | P | B | 2.5 | 20.0 | 5.0 |
| Note: "H" is a highlighted portion, and "S" is a shaded portion. | | | | | | | | | |

TABLE 2

| | Content of Surface Regulating Agent (wt%) | | | | Visual Evaluation | | Color Difference (ΔE) | | |
|---|---|---|---|---|---|---|---|---|---|
| | F-1 | F-2 | Si-1 | Si-2 | S | H | S | H | Front |
| Example 12 | 3.0 | - | - | - | G | G | 0.8 | 3.5 | 0.5 |
| Example 13 | - | - | 0.1 | - | M | M | 1.3 | 8.8 | 1.5 |
| Example 14 | - | - | 0.5 | - | M | M | 1.4 | 5.9 | 1.6 |
| Example 15 | - | - | 1.0 | - | G | G | 0.8 | 3.3 | 0.4 |
| Example 16 | - | - | 3.0 | - | G | G | 0.9 | 3.1 | 0.8 |
| Comparative Example 4 | 0 | - | - | - | P | B | 1.5 | 30.5 | 1.8 |
| Example 17 | 3.0 | - | - | - | G | G | 0.3 | 4.5 | 0.5 |
| Comparative Example 5 | 0 | - | - | - | G | P | 0.5 | 13.5 | 2.1 |
| Example 18 | 3.0 | - | - | - | G | G | 1.1 | 1.0 | 0.8 |
| Comparative Example 6 | 0 | - | - | - | B | B | 5.5 | 6.8 | 8.0 |
| Example 19 | 3.0 | - | - | - | G | G | 0.7 | 0.8 | 0.6 |
| Comparative Example 7 | 0 | - | - | - | P | P | 2.0 | 3.2 | 1.5 |
| Example 20 | 3.0 | - | - | - | G | G | 1.3 | 3.5 | 0.9 |
| Comparative Example 8 | 0 | - | - | - | M | P | 2.5 | 6.3 | 2.5 |
| Note: "H" is a highlighted portion, and "S" is a shaded portion. | | | | | | | | | |

As is apparent from the results in Tables 1 and 2, the examples according to the repair paints and the repairing processes of the present invention are superior to the comparative examples according to the repair paints having the same composition except that the fluorine surface regulating agents and/or the polysiloxane surface regulating agents were not added, in both the visual color consistency and the color difference (ΔE).

According to the paint for repairing the lustrous films and the repairing processes of the present invention, the following effects are brought about:

(1) The fluorine surface regulating agents and/or the polysiloxane surface regulating agents are added in small amounts to the brightening agent-containing paints, whereby the repaired films having the same hue as that of the nonrepaired films can be formed. It is therefore unnecessary to rely upon the prior-art complicated repairing and color toning operations by workers in charge of repair, and the variation in color tone due to individual difference is eliminated. Accordingly, the productivity of repair coating is largely improved.

(2) In addition to the needlessness of limiting repair coating means, it also becomes possible to repair the pale-colored films, particularly having much flip-flop effect, which have been considered to be difficult to be repaired. Accordingly, the degree of freedom of coating is increased and the repairable color range is enlarged, which removes the restriction on the color design of new automobiles and enlarges the range of colors employed for the films of new automobiles.

(3) Repairs of various lustrous films including repairs of new automobiles, partial repairs and repairs in the market can be conducted smoothly and normally at all times, so that the range of repairs is extremely wide.

While the invention has been described in detail and with reference to specific embodiments thereof, it will be apparent to one skilled in the art that various changes and modifications can be made therein without departing from the spirit and scope thereof.

**Claims**

1. A paint for repairing a brightening agent-containing lustrous film having a metallic pigment and/or a mica pigment, which comprises the following components (A) and (B):
   (A) A brightening agent-containing paint for repairing; and
   (B) A fluorine surface regulating agent and/or a polysiloxane surface regulating agent.

2. The paint as claimed in claim 1, wherein said paint for repairing a brightening agent-containing lustrous film contains a film-forming resin selected from the group consisting of acrylic, polyester and alkyd resins as a resin and an amino acid resin and/or blocked polyisocyanate compound as a crosslinking agent.

3. The paint as claimed in claim 1, wherein the brightening agent is metal flake and/or mica particles.

4. The paint as claimed in claim 1, wherein the fluorine surface regulating agent is a homopolymer or a copolymer obtained from a polyfluoroalkyl group-containing monomer.

5. The paint as claimed in claim 1, wherein the polysiloxane surface regulating agent is a polysiloxane polyether copolymer or an alkyl-modified polysiloxane.

6. The paint as claimed in claim 1, wherein the fluorine surface regulating agent and/or polysiloxane surface regulating agent (B) is added in an amount of from 0.1 to 5 parts by weight based on 100 parts by weight of the brightening agent component contained in brightening agent-containing paint (A).

7. The paint as claimed in claim 1, wherein the fluorine surface regulating agent and/or polysiloxane surface regulating agent (B) causes changes in orientation of the bright pigment particles contained in a repaired film.

8. A process for repairing a brightening agent-containing lustrous film having a metallic pigment and/or a mica pigment, which comprises applying a paint for repairing the lustrous film, said paint containing the following components (A) and (B), to a portion to be repaired, and then applying a clear paint thereto by a wet-on-wet coating method according to coating characteristics required for a nonrepaired film surface:
   (A) A brightening agent-containing paint for repairing; and
   (B) A fluorine surface regulating agent and/or a polysiloxane surface regulating agent.

9. The process as claimed in claim 8, wherein the brightening agent is metal flake and/or mica particles.

10. The process as claimed in claim 8, wherein the fluorine surface regulating agent is a homopolymer or a copolymer obtained from a polyfluoroalkyl group-containing monomer.

**11.** The process as claimed in claim 8, wherein the polysiloxane surface regulating agent is a polysiloxane polyether copolymer or an alkyl-modified polysiloxane.

**12.** The process as claimed in claim 8, wherein the fluorine surface regulating agent and/or polysiloxane surface regulating agent (B) is added in an amount of from 0.1 to 5 parts by weight based on 100 parts by weight of brightening agent component contained in brightening agent-containing paint (A).

**13.** The process as claimed in claim 8, wherein the fluorine surface regulating agent and/or polysiloxane surface regulating agent (B) causes changes in orientation of the bright pigment particles contained in a repaired film.

Fig. 1

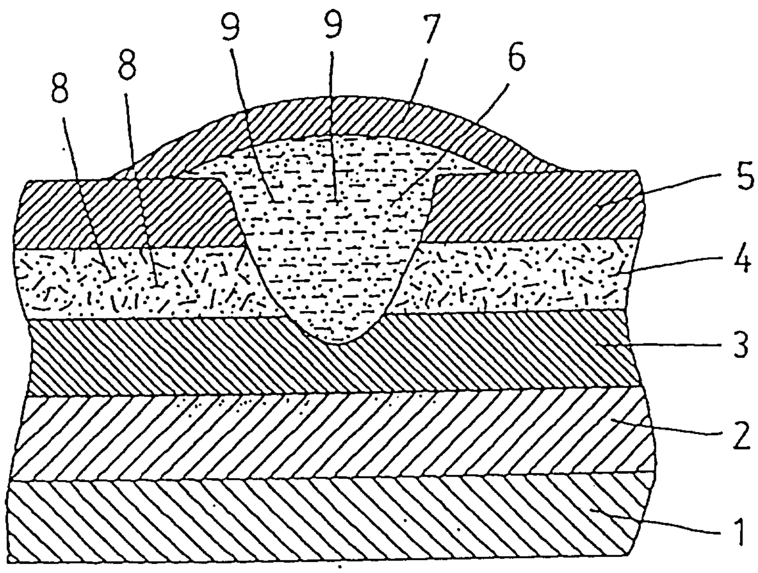


Fig. 2

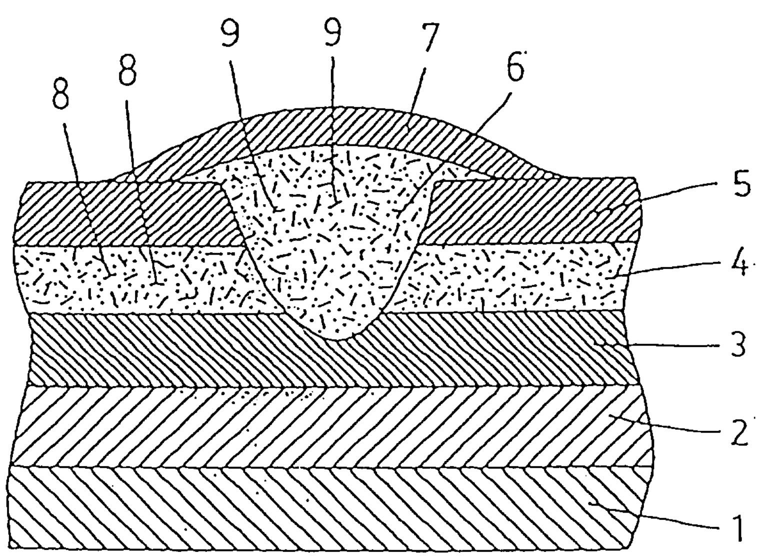

Fig. 3

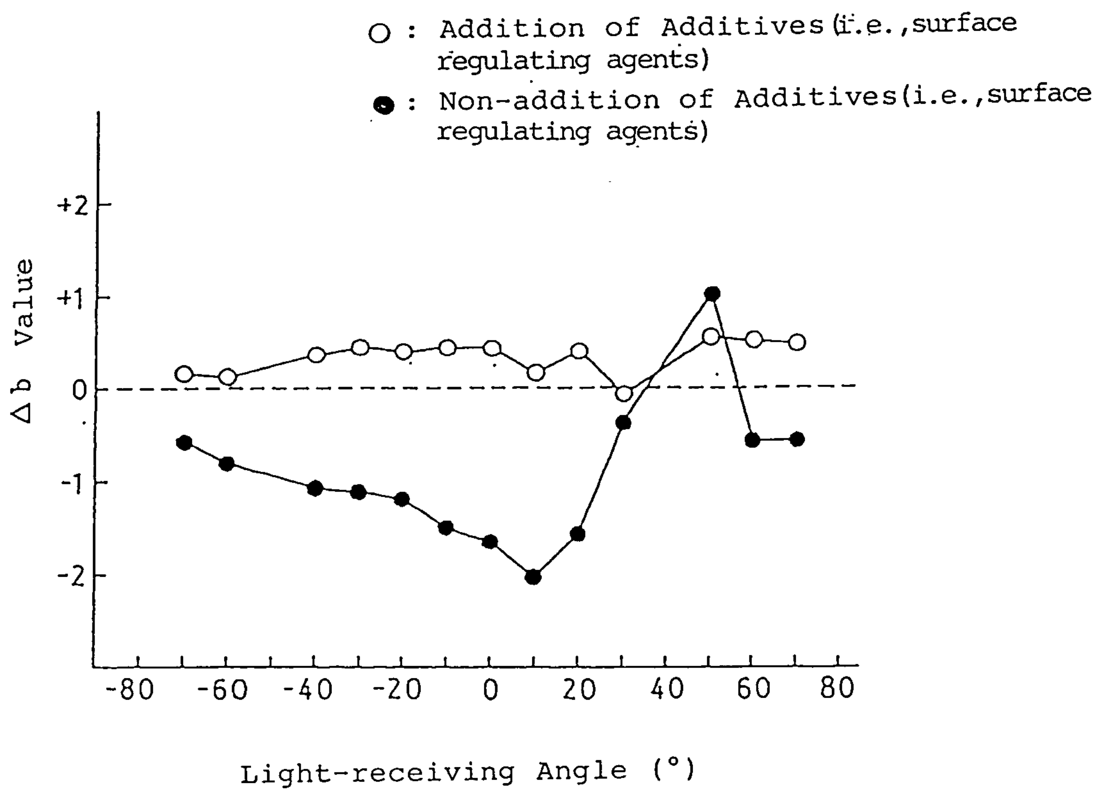
○ : Addition of Additives(i.e.,surface regulating agents)
● : Non-addition of Additives(i.e.,surface regulating agents)
Δb Value
+2
+1
0
-1
-2
-80
-60
-40
-20
0
20
40
60
80
Light-receiving Angle (°)

European Patent Office

# EUROPEAN SEARCH REPORT

Application Number

EP 95101703.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 6) |
|---|---|---|---|
| X | EP - A - 0 572 900 (HERBERTS GESELLSCHAFT MIT BESCHRÄNKTER HAFTUNG) * Claims; examples * -- | 1 | C 09 D 7/12<br>B 05 D 7/02 |
| X | DATABASE WPIL, no. 93-374738 DERWENT PUBLICATIONS LTD., London; & JP-A-05 279 604 (NGK INSULATORS LTD.) * Abstract * -- | 1 | |
| X | DATABASE WPIL, no. 92-370182, DERWENT PUBLICATIONS LTD., London; & JP-A-04 271 873 (SUMITOMO ELECTRIC CO) * Abstract * -- | 1 | |
| X | EP - A - 0 420 133 (HERBERTS GESELLSCHAFT MIT BESCHRÄNKTER HAFTUNG) * Claims; examples * ---- | | **TECHNICAL FIELDS SEARCHED (Int. Cl.6)**<br>C 09 D 7/00<br>C 09 D 133/00<br>C 09 D 167/00<br>C 09 D 5/00<br>C 09 D 4/00<br>B 05 D 7/00 |

The present search report has been drawn up for all claims

| Place of search | Date of completion of the search | Examiner |
|---|---|---|
| VIENNA | 26-05-1995 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)